# EUROPÄISCHE PATENTSCHRIFT

(11) **EP 1 565 801 B1**
(45) Veröffentlichungstag und Bekanntmachung des Hinweises auf die Patenterteilung: **24.05.2006**
(21) Anmeldenummer: 03773697.2
(22) Anmeldetag: 03.11.2003
(51) Int. Cl.: G06F 1/00, G07F 7/02, H04L 12/28, H04L 12/14, H04M 15/00, H04Q 7/38, H04M 17/00

(54) **VERFAHREN ZUR AUTHENTISIERUNG UND VERGEBÜHRUNG EINES TEILNEHMERS EINES FUNKNETZES**
METHOD FOR AUTHENTICATING AND CHARGING A SUBSCRIBER OF A RADIO NETWORK
PROCEDE D'AUTHENTIFICATION ET DE TAXATION D'UN ABONNE DE RESEAU DE RADIOTELEPHONIE

(30) Priorität: 26.11.2002 EP 02026272
(43) Veröffentlichungstag der Anmeldung: 24.08.2005
(73) Patentinhaber: SIEMENS AKTIENGESELLSCHAFT, 80333 München (DE)
(72) Erfinder: MORPER, Hans-Jochen, 85253 Erdweg (DE)
(86) Internationale Anmeldenummer: PCT/EP2003/012255
(87) Internationale Veröffentlichungsnummer: WO 2004/049139

(56) Entgegenhaltungen:
- EP-A- 1 150 482
- WO-A-01/63883
- WO-A-95/19593
- MOBILETHINK AS: "Premium Rate SMS in Denmark-Whitepaper" MOBILETHINK AS, August 2001 (2001-08), Seiten 1-18, XP002223096 internet Gefunden im Internet: <URL:http://www.mobilethink.dk/downloads/P remium_rate_SMS_whitepaper_2.pdf> [gefunden am 2002-11-29]
- 3GPP TSG-T WG2 SWG3#09: "Liaison Statement on Billing and network aspects concerning Multimedia Messagging Interworking" T2M020053, [Online] 14. Januar 2002 (2002-01-14), - 18. Januar 2002 (2002-01-18) XP002237533 Paris Gefunden im Internet: <URL:http://www.3gpp.org/ftp/tsg_t/WG2_Cap ability/SWG3/SWG3_09_10_Paris/Docs/T2M0200 53%20LS%20to%20BARG%20on%20MMS%20charging. doc> [gefunden am 2003-04-04]

## Beschreibung

Die Erfindung betrifft ein Verfahren zur Authentisierung eines Teilnehmers eines ersten Funknetzes und zur Vergebührung einer Kommunikation zwischen einer Teilnehmereinrichtung des Teilnehmers und dem ersten Funknetz unter Verwendung eines Mobilfunkkommunikationssystems nach dem Oberbegriff des Anspruchs 1.

Zur Kommunikation bzw. zur Übertragung von Daten ist eine Vielzahl verschiedenartigster Telekommunikations- und Datennetze bekannt. Dabei ist zwischen zwei grundsätzlich verschiedenen Netztypen zu unterscheiden. Einerseits gibt es die Mobilfunkkommunikationssysteme, beispielsweise gemäß dem Standard GSM (Global System for Mobile Telecommunications) oder dem Standard UMTS (Universal Mobile Telecommunications System), bei denen Mobilstationen beim Einbuchen in das entsprechende Netz authentisiert und autorisiert werden. Vorteilhaft an derartigen Netzen ist, dass durch die. Authentisierung auch eine Vergebührung von beanspruchten Diensten möglich ist. Weiterhin bieten diese in der Regel zellularen Netze die Möglichkeit einer hohen Mobilität, da sich ein Teilnehmer mit seiner Mobilstation von Netzzelle zu Netzzelle bewegen kann. Nachteilhaft ist bei derartigen zellularen Mobilfunkkommunikationssystemen, dass der Verwaltungsaufwand sehr hoch ist. Außerdem stellen diese Systeme den Funkschnittstellen zur teilnehmerseitigen Mobilstation nur eine relativ niedrige Datenrate zur Verfügung.

In Mobilfunkkommunikationssystemen werden Informationen (beispielsweise Sprache, Bildinformation, Videoinformation, Kurznachrichten (SMS, Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei teilnehmerseitige Stationen, z.B. Mobilstationen, und Basisstationen, z.B. Node B's, sowie weitere netzseitige Einrichtungen. Hierbei bilden die Basisstationen und die netzseitigen Einrichtungen das Mobilfunknetz. Die teilnehmerseitigen Stationen und die Basisstationen sind in einem Funkkommunikationssystem über eine Funkschnittstelle miteinander verbunden.

Andererseits gibt es Netze, die als lokale Netze (LAN, Local Area Network) bzw. lokale Funknetze (WLAN: Wireless Local Area Network) ausgestaltet sind. Derartige Netze bieten für Teilnehmereinrichtungen einen verwaltungstechnisch sehr einfachen Zugang. Ein weiterer Vorteil besteht in der im Vergleich zu Mobilfunknetzen erheblich höheren Datenrate auf den Schnittstellen zur Teilnehmereinrichtung. Nachteilhaft bei derartigen lokalen Netzen ist jedoch die fehlende Authentisierungsmöglichkeit und somit auch eine fehlende Vergebührungsmöglichkeit.

Unter lokalen Netzen versteht man in der Regel Kommunikationsnetze mit einer Ausdehnung von einigen 10 Metern bis hin zu 10 Kilometern. Die Mehrheit der LANs dehnt sich jedoch nur über einige hundert Meter innerhalb von Gebäuden oder einer Organisation aus (Inhouse-Netze).

WLANs ermöglichen z.B. die Kommunikation zwischen einer drahtgebundenen Netzinfrastruktur und mobilen Rechnern. Oft werden WLANs als Ergänzung für kabelgestützte LANs in bestimmten Arbeitsumgebungen eingesetzt. In der Regel umfassen WLANs verschiedene zugangspunkte (Access Points, APs), die über ein drahtgestütztes LAN miteinander verbunden sind und bei denen der Datentransport von einem mobilen Sender über eine Funkstrecke zum AP erfolgt und dann über das LAN weitergeleitet wird. Die von den WLANs abgedeckten Zellen sind mit einem Durchmesser von bis zu einigen hundert Metern im Vergleich zu üblichen Mobilfunkzellen so klein, dass sie Mikrozellen genannt werden.

Beispiele für verschiedene Standards für WLANs sind HiperLAN, DECT, IEEE 802.11, Bluetooth und WATM. Als lokale Funknetze scheinen sich jedoch derzeit vor allem in den USA und Europa fast ausschließlich Produkte auf Basis der IEEE 802.11-Familie durchzusetzen, wobei entsprechende Ethernet-Anschlüsse bereits in vielen Computern und tragbaren Computern (z.B. Laptop, Notebook, PDA) standardmäßig bereitgestellt werden. Die gemäß dem IEEE 802.11b-Standard definierte Funkschnittstelle zum Zugriff auf lokale Netze entspricht funktional einem verdrahteten Anschluss an lokale Netze (LANs), die sich heutzutage zum Standard in Büros entwickelt haben. Schnittstellen-Karten für funkgestützte Zugriffe auf lokale Netze, die auch als NICs (Network Interface Cards) bezeichnet werden, sind aus architektonischer Sicht wie standardisierte Ethernet-Karten gefertigt und mit den heutigen Betriebssystemen per sogenanntem Plug & Play einzusetzen. Tragbare Computer sind mit entsprechenden Schnittstellenkarten problemlos nachrüstbar, sofern sie nicht bereits ab Werk mit einem integrierten Anschluss für einen verdrahteten oder funkgestützten Zugriff auf lokale Netze ausgeliefert werden. Bei den aktuellen und nächsten Betriebssystemgenerationen (z. B. Windows XP von Microsoft), wird eine voll integrierte Unterstützung von lokalen Funknetzen (WLANs) bereitgestellt.

Allgemein wird für WLANs der nicht lizenzierte Frequenzbereich um 2,4 GHz und 5GHz genutzt. Datenübertragungsraten liegen bei bis zu 11 Mbit/s. Künftige WLANs könnten im 5 GHz Bereich betrieben werden und Datenraten über 50 Mbit/s erreichen. Mit Datenraten von derzeit 11 Mbit/s und zukünftig 50 Mbit/s stehen damit den Teilnehmern der WLANs Datenraten zur Verfügung, die erheblich höher liegen, als diejenigen Datenraten, die von der nächsten, dritten Mobilfunkgeneration (z.B. UMTS) angeboten werden können. Damit wird für die Übertragung von großen Datenmengen, insbesondere in Verbindung mit Internetzugriffen, der Zugriff auf funkgestützte lokale Netze (WLANs) für hochbitratige Verbindungen oftmals bevorzugt.

WLANs werden in immer größerem Umfang in Hotels, Flughäfen, Ausstellungen und anderen Orten mit hohen Besucherdichten eingesetzt. Ein wesentlicher Faktor für den Erfolg von WLANs ist die Authentisierung und Vergebührung von Teilnehmern. Nachteilhafterweise können die funkgestützten lokalen Netze (WLANs) keine Authentisierungsmöglichkeit für nicht bereits im System registrierte Stationen bzw. Computer bieten. Betreiber von WLANs müssen jedoch beispielsweise in einem Flughafenbereich den Zugriff für eine Vielzahl unterschiedlichster Teilnehmer aus unterschiedlichsten Regionen bieten. Um einen Teilnehmer authentisieren zu können, müsste der Betreiber des WLANs Über-Kreuz-Abkommen (Cross-License-Agreements) mit allen möglichen Internet-Diensteanbietern (ISP, Internet Service Providern) abschließen, wovon es jedoch allein in Deutschland derzeit über 60.000 gibt.

Ohne eine Authentisierung von Teilnehmern bzw. Teilnehmereinrichtungen kann jedoch im WLAN auch keine Vergebührung von beanspruchten Diensten erfolgen, da unbekannt ist, an wen eine Rechnung gesendet werden soll. Ein Zugriff auf lokale Funknetze muss daher entweder gebührenfrei oder mit Vorausbezahlung als sogenannter Prepaid-Dienst über eine Kreditkartenabrechnung oder dergleichen angeboten werden.

Bei den Betreibern der vorstehend beschriebenen Mobilfunkkommunikationssysteme sind diese Probleme in einfacher Art und Weise lösbar. Die zellularen Mobilfunknetze verfügen über eine große Anzahl von Mobilfunkteilnehmern, die authentisierbar sind. Weiterhin verfügen diese Mobilfunknetze über ein Vergebührungs- bzw. Billing-System. Über ein sogenanntes internationales Roaming können auch Teilnehmer bedient und authentisiert werden, die bei einem anderen Mobilfunkbetreiber registriert bzw. subskribiert sind. Da heutzutage ein Großteil der Verbraucher in Industrieländern Mobilfunkteilnehmer sind, kann ein Mobilfunkbetreiber im Prinzip nahezu jeden Verbraucher selber oder mit Hilfe anderer Mobilfunkbetreiber adressieren.

Ansätze, wie ein Mobilfunkbetreiber ein WLAN in sein eigenes zellulares Mobilfunknetz integrieren kann, sind vielfältig. Bei dem derzeitigen Diskussionsstand wird grundsätzlich zwischen fester und loser Kopplung (Tight and Loose Coupling) unterschieden. Unter fester Kopplung wird die vollständige UMTS-Integration verstanden, d.h. man benutzt nur die physikalische Schicht (Physical Layer) des WLAN, während ansonsten alle höheren Protokollschichten von UMTS übernommen und angepasst werden. Diese Lösung wird mittlerweile nicht mehr diskutiert, da sie sich als wirtschaftlich wenig erfolgversprechend und technisch schwer realisierbar erwiesen hat.

Bei den losen Kopplungsvarianten sind zur Zeit zwei infrastrukturbasierte Kopplungsvarianten in der öffentlichen Diskussion, die auf der Verwendung einer registrierten Identifizierungskarte (SIM, Subscriber Identification Module) bzw. dem RADIUS-Protokoll (RADIUS, Remote Access Dial-In User Access) beruhen. Bei der SIM-basierten Variante wird in ein Notebook oder eine Netzzugangskarte für dieses eine SIM-Karte eingesetzt. Das WLAN erscheint z.B. als lokales Besucherregister (VLR, Visitor Local Register) des Mobilfunkkommunikationssystems und wird über das sogenannte MAP (Mobile Application Part) an das Mobilfunknetz angebunden. Ein wirtschaftlicher Erfolg für den Betreiber des Mobilfunknetzes hängt jedoch stark davon ab, ob zukünftig jede Karte für Zugriffe auf lokale Funknetze standardmäßig eine SIM-Karte beinhalten wird. Hierzu müssten Computerhersteller sowie die Standardisierungsgremien für Datennetze und Telekommunikationsnetze gemeinsame Standards entwickeln oder ein Mobilfunkbetreiber müsste diese spezielle Art von NICs subventionieren.

Bei der RADIUS-Variante erscheint das Mobilfunknetz z.B. als Authentisierungs-, Autorisierungs- und Vergebührungs-Server des WLAN, wodurch eine Modifikation der Teilnehmerausstattung im WLAN nicht erforderlich ist.

In einem weiteren Ansatz gibt der Teilnehmer des WLAN seine Mobilrufnummer (MSISDN, Mobile Subscriber ISDN Number) in eine HTML (HyperText Markup Language) Seite des WLAN ein, welche von dem WLAN an das Mobilfunkkommunikationssystem übermittelt wird. Anschließend sendet das Mobilfunkkommunikationssystem dem Teilnehmer des WLAN ein Passwort per SMS an seine Mobilstation, welches dann für die Zugangskontrolle im WLAN verwendet wird. Dadurch ist sichergestellt, dass nur der Teilnehmer Zugang zum WLAN erhält, welcher auch im Besitz der gültigen Subskription des Mobilfunkkommunikationssystems ist.

Aus dem Dokument WO 95/19593 ist ein Verfahren zur Authentisierung eines Nutzers eines Computersystems bekannt, bei welchem über ein Paging-System eine Nachricht an den Nutzer gesendet wird. Dieser bearbeitet die Nachricht und sendet die überarbeitete Nachricht an das Computersystem, wo diese als Entscheidungskriterium für die Zulassung des Nutzers verwendet wird.

Speziell im terrestrischen GSM-MObilfunk wird mit der Abkürzung SMS ein standardisierter Dienst zur einseitig gerichteten Übertragung (unidirektional) von Nachrichten mit begrenztem Umfang verstanden. Kurznachrichten sind Textnachrichten, welche einen bestimmten maximalen Umfang an Textzeichen nicht übersteigen.

In dem Dokument WO 01/63883 A2 ist ein Verfahren vorgestellt, bei welchem die Vergebührung einer Kurznachricht über ein Prepaid-Konto eines Nutzers, welcher die Kurznachricht versendet oder ernpfängt, erfolgt. Ein Verfahren zur Aufladung eines Prepaid-Kontos ist z.B. im Dokument EP 1 150 482 A2 beschrieben.

Hiermit ist zwar das Problem der Authentisierung der WLAN Teilnehmer gelöst, jedoch muss weiterhin ein effektives Verfahren zur Vergebührung gefunden werden. Hierzu wurde neben der Übertragung von Vergebührungsinformation von dem WLAN an einen sogenannten Wallet-Server die Übermittlung der Vergebührungsinformation von dem WLAN an den Betreiber des Mobilfunkkommunikationssystems vorgeschlagen. Letztes kann durch eine Kopplung des WLAN an ein MicroPayment-System des Mobilfunknetzes durchgeführt werden.

Die beschriebenen Verfahren zur Vergebührung erfordern jedoch die Bereitstellung zusätzlicher Geräte innerhalb des WLAN. Daher stehen sie in Konflikt mit den wirtschaftlichen Interessen der Betreiber der WLANs.

Aufgabe der Erfindung ist es, ein Verfahren der eingangs genannten Art aufzuzeigen, welches sowohl eine effektive und wenig aufwendige Authentisierung als auch eine ebensolche Vergebührung eines Teilnehmers eines Funknetzes unter Verwendung eines Mobilfunkkommunikationssystems ermöglicht.

Diese Aufgabe wird durch ein Verfahren mit den Merkmalen des Anspruchs 1 gelöst.

Vorteilhafte Ausgestaltungen und Weiterbildungen sind Gegenstand der Unteransprüche.

Erfindungsgemäß wird Identifikationsinformation des Teilnehmers und/oder der Mobilstation über die Teilnehmereinrichtung von dem ersten Funknetz zu dem Mobilfunknetz übermittelt, oder die Mobilstation übermittelt dem Mobilfunknetz ein Signal, daraufhin sendet das Mobilfunknetz der Mobilstation eine gebührenpflichtige Kurznachricht, welche Zugangsinformationen zu dem ersten Funknetz beinhaltet, und die Vergebührung der Kommunikation zwischen der Teilnehmereinrichtung und dem ersten Funknetz erfolgt über eine Vergebührung der Kurznachricht im Mobilfunknetz.

Das erste Funknetz stellt insbesondere ein lokales Funknetz, d.h. ein WLAN, dar. Das Verfahren kann jedoch grundsätzlich auch auf andere Funknetze angewandt werden. Das von der Mobilstation an das Mobilfunknetz übermittelte Signal ist derart ausgestaltet, dass das Mobilfunknetz erkennt, dass der Teilnehmer Zugangsinformation zu dem ersten Funknetz wünscht. Die Kurznachricht, welche der Mobilstation von dem Mobilfunknetz gesendet wird, beinhaltet zumindest die Zugangsinformation. Sie kann jedoch auch andere Informationen enthalten. Die Zugangsinformation kann von dem ersten Funknetz dazu verwendet werden, über einen Zugang des Teilnehmers zu diesem ersten Funknetz zu entscheiden. Dadurch ermöglicht die Zugangsinformation eine Kommunikation des Teilnehmers über seine Teilnehmereinrichtung mit dem ersten Funknetz. Die Vergebührung der Kurznachricht im Mobilfunknetz erfolgt über ein geeignetes Gebührenkonto. Hierbei kann es sich um ein Gebührenkonto des Teilnehmers handeln, aber auch um andere Gebührenkonten, welche zum Beispiel für eine Gruppe von Teilnehmern oder ähnliches definiert sind.

Das erfindungsgemäße Verfahren weist eine Reihe von Vorteilen auf:
- Der Betreiber des Mobilfunkkommunikationssystems kann kostengünstig, d.h. ohne zusätzlichen Aufwand, WLANs fremder Anbieter an das eigene Mobilfunknetz anschließen.
- Die Teilnehmer sind SMS basierte Nutzinformation gewöhnt, daher ist für sie keine Umstellung auf eine neue Technologie nötig.
- Die Gefahr der Versendung von Rechnungen durch den Betreiber des WLAN an "falsche" Personen ist ausgeschlossen.
- Die einmalige Zahlung für die Kurznachricht entspricht einer Flatrate, welche von den Teilnehmern in der Regel als gewünschte Zahlungsvariante betrachtet wird.
- Der gewünschte Dienst des WLAN kann sofort nach Empfang der Kurznachricht in Anspruch genommen werden.
- Der Betreiber des Mobilfunkkommunikationssystems kann die Nachfrage nach Diensten, welche den zukünftigen UMTS-Diensten entsprechen, über eine Nachfrage nach entsprechenden Diensten innerhalb des WLAN testen.
- Für die Betreiber des Mobilfunkkommunikationssystems und des WLAN sind keine zusätzlichen Investitionen in neue Baugruppen nötig.
- Die Teilnehmer zeigen eine erhöhte Bereitschaft, weitere kostenpflichtige Dienste über das gleiche Vergebührungsverfahren abzuwickeln. So können z.B. bestimmte Internetdienste nach erfolgtem Zugang des Teilnehmers zum WLAN über eine Vergebührung einer weiteren Kurznachricht im Mobilfunknetz vergebührt werden. In diesem Fall wird also das Verfahren zur Vergebührung einer Kommunikation zwischen der Teilnehmereinrichtung des Teilnehmers und dem ersten Funknetz erneut in Bezug auf eine bestimmte Kommunikation durchgeführt, nachdem der Teilnehmer bereits nach dem erfindungsgemäßen Verfahren authentisiert wurde und eine erste erfindungsgemäße Vergebührung stattgefunden hat. Die Zugangsinformation bezieht sich dann auf den weiteren kostenpflichtigen Dienst, welchen der Teilnehmer anfordert. Das erfindungsgemäße Verfahren kann somit bei Bedarf wiederholt angewendet werden, womit eine Staffelung von Gebühren erreicht wird.

In einer Ausgestaltung der Erfindung erfolgt die Vergebührung der Kurznachricht im Mobilfunknetz nach dem Empfang der Kurznachricht durch die Mobilstation. In diesem Fall erfolgt die Vergebührung also unabhängig davon, welche Verwendung der Teilnehmer von der Zugangsinformation macht. Die Gebühr kann von dem geeigneten Gebührenkonto abgezogen werden, sobald der Teilnehmer die gebührenpflichtige Kurznachricht mit seiner Mobilstation empfangen hat.

Vorteilhafterweise erfolgt die Vergebührung der Kurznachricht im Mobilfunknetz nach dem Öffnen der Kurznachricht. Hierbei kann vor dem Öffnen der Kurznachricht eine Anfrage an den Teilnehmer gestellt werden, ob er diese gebührenpflichtige Kurznachricht öffnen will. Hiermit kann vermieden werden, dass ein Teilnehmer Gebühren für eine Kurznachricht zahlen muss, welche er nicht verwenden oder einsehen will oder nicht absichtlich angefordert hat.

In einer Weiterbildung der Erfindung erfolgt die Vergebührung der Kurznachricht im Mobilfunknetz nach der Verwendung der Zugangsinformation in dem ersten Funknetz. Hierdurch wird realisiert, dass der Teilnehmer des ersten Funknetzes nur dann vergebührt wird, wenn er die Zugangsinformation dazu einsetzt, eine Kommunikation mit dem ersten Funknetz zu starten. Der Teilnehmer kann sich in diesem Fall also eine Kurznachricht mit der Zugangsinformation von dem Mobilfunknetz senden lassen, ohne diese tatsächlich zu verwenden. Eine Vergebührung würde in diesem Fall nicht erfolgen.

Mit Vorteil kann die Identifikationsinformation des Teilnehmers und/oder der Mobilstation die Rufnummer der Mobilstation sein. Somit erfährt das Mobilfunknetz auf direkte Weise die Rufnummer, an welche die gebührenpflichtige Kurznachricht im folgenden versendet werden soll. Auch eine Versendung des Namens des Teilnehmers oder einer Kennzeichnungsnummer wie z.B. die IMSI (International Mobile Subscriber Identity) ist hierbei denkbar, so dass das Mobilfunknetz aus diesen Informationen die Rufnummer ermittelt, an welche die gebührenpflichtige Kurznachricht gesendet werden soll.

In einer bevorzugten Ausführungsform der Erfindung übermittelt die Mobilstation dem Mobilfunknetz das Signal unter Verwendung einer Rufnummer des Mobilfunknetzes, welche für die Authentisierung und Vergebührung des Teilnehmers des ersten Funknetzes eingesetzt wird. Hierbei kann es sich zum Beispiel um eine spezielle Rufnummer eines intelligenten Netzes handeln, welche eigens für den Zweck der Authentisierung und Vergebührung innerhalb eines anderen Funknetzes eingerichtet wurde. Das Mobilfunknetz erkennt an dieser speziellen Rufnummer, welche Anforderungen der Teilnehmer stellt, nämlich die Übermittlung der gebührenpflichtigen Kurznachricht mit der Idehtifikationsinformation.

Vorteilhafterweise handelt es sich bei der Rufnummer um eine gebührenfreie Rufnummer.

Einer Ausgestaltung der Erfindung zufolge hängt die Gebühr für die Kurznachricht von dem vom Teilnehmer im ersten Funknetz angeforderten Dienst ab. Die Vergebührung der Kommunikation zwischen der Teilnehmereinrichtung und dem ersten Funknetz über eine Vergebührung der Kurznachricht im Mobilfunknetz entspricht einer pauschalen Vergebührung der Kommunikation zwischen der Teilnehmereinrichtung und dem ersten Funknetz. Demzufolge scheint eine höhere Gebühr für einen Dienst, der eine hohen Datenrate erfordert, geeignet zu sein. In der Regel sollte die Gebühr für die Kurznachricht mit der Zugangsinformation höher sein als eine übliche Gebühr für andere im Mobilfunkkommunikationssystem versendete Kurznachrichten.

In einer bevorzugten Ausführungsform der Erfindung übermittelt das Mobilfunknetz die Zugangsinformation an das erste Funknetz. Somit kann das erste Funknetz die ihr von dem Mobilfunknetz übermittelte Zugangsinformation mit der Zugangsinformation der Teilnehmereinrichtung vergleichen und somit über einen Zugang des Teilnehmers zum ersten Funknetz entscheiden. Es ist auch möglich, dass sowohl das Mobilfunknetz als auch das erste Funknetz über eine Liste von gültigen Zugangsinformationen verfügen. Aus dieser Liste wählt dann das Mobilfunknetz eine Zugangsinformation aus, um diese der Mobilstation über die kostenpflichtige Kurznachricht zuzusenden.

Nachfolgend wird die Erfindung anhand eines Ausführungsbeispiels verdeutlicht. Das Ausführungsbeispiel wird im Folgenden anhand von Figuren näher erläutert. Dabei zeigen:
- Figur 1:: ein Ablaufschema eines erfindungsgemäßen Verfahrens,
- Figur 2:: schematisch ein Mobilfunkkommunikationssystem,
- Figur 3:: schematisch ein lokales Funknetz und ein Mobilfunknetz.

Im Ausführungsbeispiel wird ein Teilnehmer betrachtet, welcher in einem Mobilfunkkommunikationssystem subskribiert ist. Dieser Teilnehmer hält sich mit seiner Mobilstation und seinem Laptop im Funkabdeckungsbereich eines WLAN auf. Der Teilnehmer möchte die Dienste des lokalen Netzes in Anspruch nehmen. Da der Betreiber des WLAN das lokale Funknetz nicht kostenlos zur Verfügung stellen möchte, muss ein Verfahren zur Authentisierung und Vergebührung des Teilnehmers durchgeführt werden.

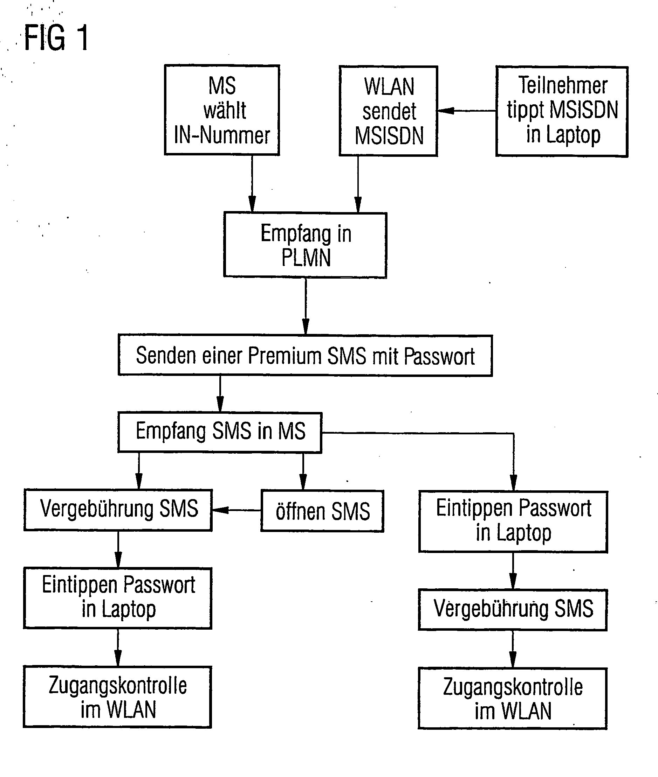

Ein Ablaufschema eines erfindungsgemäßen Verfahrens zur Authentisierung und Vergebührung ist in Figur 1 dargestellt. Zu Beginn des Verfahrens existieren zwei Möglichkeiten für den Teilnehmer: er kann auf eine Anfrage des WLAN seine Mobilrufnummer dem WLAN mitteilen ("Teilnehmer tippt MSISDN in Laptop"), woraufhin das WLAN diese Nummer an das Mobilfunkkommunikationssystem übermittelt ("WLAN sendet MSISDN"). An der Meldung des WLAN erkennt das Mobilfunknetz, dass der Teilnehmer Zugang zu dem WLAN sucht.

Alternativ kann der Teilnehmer über seine Mobilstation die Nummer eines speziellen IN (Intelligentes Netzwerk) Dienstes wählen ("MS wählt IN-Nummer"). Derzeit übliche Mobilfunknetze verfügen in der Regel über ein intelligentes Netz, mit Hilfe dessen sie sogenannte Hilfsdienstleistungen bzw. Supplementary Services für ihre Mobilfunkkunden anbieten können, wie z.B. die Anrufweiterleitung auf eine Sprachbox. Diese Systeme bestehen in der Regel aus einem Diensteschaltpunkt und einem Dienstesteuerpunkt. Ersterer erkennt beispielsweise an der gewählten Rufnummer, dass ein IN Dienst gewünscht wird, letzterer erkennt den gewünschten Dienst und ermöglicht die Bereitstellung sowie die Vergebührung desselben. Dienstesteuerpunkte sind in der Regel auf Serverplattformen realisiert. Anhand der gewählten Nummer erkennt das Mobilfunknetz, dass der Teilnehmer Zugang zu dem WLAN sucht.

Das Mobilfunknetz sendet nach dem Empfang der Information bezüglich der Anforderung der Zugangsinformation ("Empfang im PLMN") eine Premium SMS an die Mobilstation des Teilnehmers, welche ein Passwort zum einmaligen Gebrauch (One-Time Passwort) zur Benutzung in dem WLAN enthält ("Senden einer Premium SMS mit Passwort"). Eine Premium oder Mehrwert SMS zeichnet sich durch erhöhte Kosten gegenüber einer üblichen SMS aus. Die für den Teilnehmer anfallenden Kosten für die Premium SMS sind daher gegenüber den normalen Kosten für eine SMS (z.B. 19 Euro Cent) um eine, dem im WLAN angeforderten Dienst entsprechende Gebühr (z.B. 10 Euro pro Tag WLAN Zugang) erhöht. Der Teilnehmer zahlt also nur eine einzige Gebühr für die Nutzung des WLAN. Eine Erfassung der Zeit der Nutzung des WLAN oder der übertragenen Datenmenge muss nicht stattfinden. Daher kann die Nutzung sonst üblicher Vergebührungssysteme entfallen. Es ist jedoch möglich, dem Mobilfunknetz über die IN-Nummer oder mit der Übermittlung der MSISDN mitzuteilen, welche Art von Dienst der Teilnehmer beanspruchen möchte, so dass der Preis einer Premium SMS je nach Dienstekategorie variiert werden kann.

Nachdem die Mobilstation die Premium SMS empfangen hat ("Empfang SMS in MS"), gibt es verschiedene Möglichkeiten für den Zeitpunkt der Vergebührung. Im einfachsten Fall kann die Vergebührung direkt nach dem Empfang der SMS durchgeführt werden ("Vergebührung SMS"). Von dem Guthabenkonto, welches dem Teilnehmer in dem Mobilfunkkommunikationssystem zugeordnet ist, werden so z.B. 10,19 Euro abgebucht. Eine andere Möglichkeit ist die Vergebührung zu dem Zeitpunkt, wenn der Teilnehmer die Premium SMS geöffnet hat ("Öffnen SMS"). Dies kann auch mit einer Sicherheitsabfrage vor dem Öffnen der Premium SMS verbunden werden, so dass der Teilnehmer vor dem Öffnen der Premium SMS darauf aufmerksam gemacht wird, dass bei Öffnung der Kurznachricht erhöhte Kosten anfallen. Eine weitere Möglichkeit ist die Vergebührung nach der Benutzung des Passwortes durch den Teilnehmer im WLAN ("Eintippen Passwort in Laptop"). In letzterem Fall muss das WLAN dem Mobilfunknetz mitteilen, dass eine Benutzung des Passworts stattgefunden hat. Dies kann auch dadurch realisiert werden, dass Teile des WLAN Bestandteil des Mobilfunkkommunikationssystems sind, so dass eine Benachrichtigung des Mobilfunknetzes durch das WLAN entfällt.

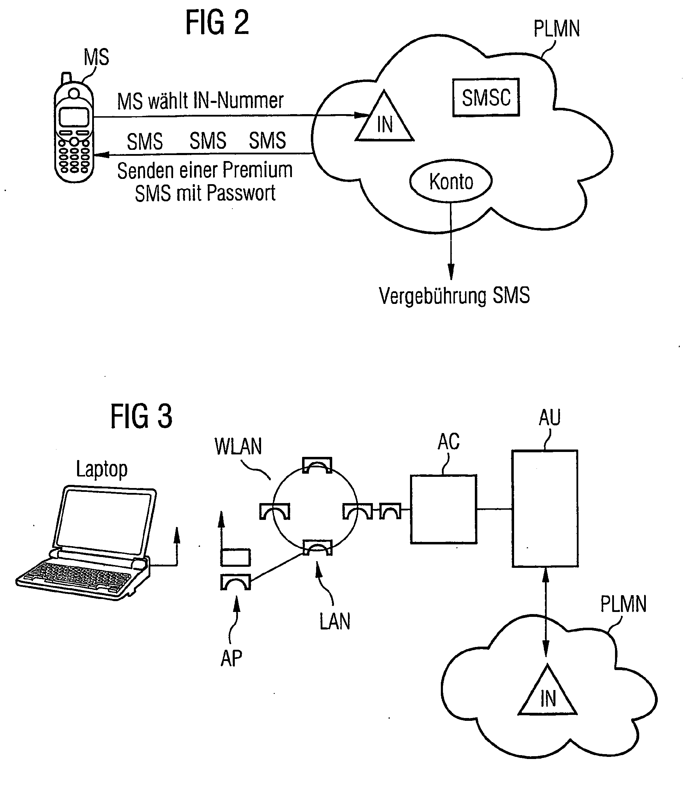

Figur 2 zeigt schematisch den Ablauf zwischen der Mobilstation MS und dem Mobilfunknetz PLMN. Die Mobilstation MS wählt die jeweilige Nummer des intelligenten Netzes IN, welches Bestandteil des Mobilfunknetzes PLMN ist ("MS wählt IN-Nummer). Daraufhin sendet das Mobilfunknetz PLMN der Mobilstation MS eine Premium SMS, welche ein gültiges Passwort für das WLAN enthält ("Senden einer Premium SMS mit Passwort"). In die Versendung der SMS ist eine Einrichtung SMSC (Short Message Service Center) involviert. Die Einrichtung SMSC garantiert die Zustellung von Kurznachrichten und gibt Vergebührungsinformationen bezüglich der Kurznachrichten an ein Vergebührungssystem des Mobilfunknetzes PLMN weiter. Das Mobilfunknetz PLMN führt ein Guthabenkonto KONTO für den Teilnehmer. Von diesem Guthabenkonto KONTO wird die für die Premium SMS anfallende Gebühr abgehoben ("Vergebührung SMS").

Um Zugang zu dem WLAN zu erlangen, tippt der Teilnehmer das ihm von dem Mobilfunknetz übermittelte Passwort in den Laptop ein ("Eintippen Passwort in Laptop" in Figur 1). Das Passwort kann in Verbindung mit der MSISDN oder auch ohne diese über eine Eingabemaske am Laptop eingegeben werden. Daraufhin kann das WLAN über den Zugang des Teilnehmers entscheiden ("Zugangskontrolle WLAN").

Figur 3 zeigt den Rechner LAPTOP, welches über eine Funkstrecke mit einem Zugangspunkt AP des WLAN verbunden ist. Der Rechner LAPTOP steht hierbei für eine geeignete Teilnehmereinrichtung, die in der Lage ist, mit dem WLAN über Funk zu kommunizieren. Das WLAN besteht aus einer Vielzahl von Einrichtungen, die über Funk oder mit entsprechenden Leitungen miteinander verbunden sind. Zu den Einrichtungen gehören Router und Brücken zum Verteilen von Daten auf eine Vielzahl von Teilnehmereinrichtungen. Der über Leitungen verbundene Teil des WLAN stellt ein LAN dar. Das Passwort wird von dem Rechner LAPTOP über Funk an den Zugangspunkt AP gesendet, von wo aus es über Leitungen zu einer Authentisierungsinstanz AU gelangt.

Die Authentisierungsinstanz AU vergleicht das von dem Rechner LAPTOP empfangene Passwort mit Informationen, die dieser von dem Mobilfunknetz PLMN übermittelt wurden. Hierzu weist das Mobilfunknetz PLMN eine Passwort-Diensteeinheit auf, welche gültige Passwörter an das WLAN sendet. Die Passwort-Diensteeinheit kann diese Passwörter gegebenenfalls generieren. Die gültigen Passwörter können dem WLAN zyklisch, wie z.B. täglich, oder adhoc, wie z.B. auf Anfrage, übermittelt werden. Beispielsweise kann täglich eine gültige Passwortliste an das WLAN übermittelt werden. Wurde ein Passwort benutzt, wird es im WLAN und im Mobilfunknetz PLMN aus der Liste gestrichen. Die Übermittlung eines Passwortes an das WLAN durch das Mobilfunknetz PLMN kann also vor der Übermittlung des Passwortes an die Mobilstation MS erfolgen, oder auch in etwa gleichzeitig, je nach Art der Kopplung zwischen WLAN und Mobilfunkkommunikationssystem. Die Autentisierungsinstanz AU kann z.B. auch Teil eines entsprechenden IN-Dienstes sein.

Die Authentisierungsinstanz AU kann eine Zugangskontrollinstanz AC (Access Control) nach erfolgreicher Authentisierung für die zur Verfügungsstellung eines Dienstes des WLAN freischalten. Die Authentisierungsinstanz AU und die Zugangskontrollinstanz AC können zusammen auf einer Plattform oder getrennt sein. Nach erfolgter Freischaltung kann der Rechner LAPTOP gemäß dem angeforderten Dienst mit dem bzw. über das WLAN kommunizieren.

## Patentansprüche

1. Verfahren zur Authentisierung eines Teilnehmers eines ersten Funknetzes (WLAN) und zur Vergebührung einer Kommunikation zwischen einer Teilnehmereinrichtung (LAPTOP) des Teilnehmers und dem ersten Funknetz (WLAN), wobei ein Mobilfunkkommunikationssystem, umfassend eine Mobilstation (MS) des Teilnehmers und ein Mobilfunknetz (PLMN) verwendet wird,
**dadurch gekennzeichnet,**
**dass** Identifikationsinformation des Teilnehmers und/oder der Mobilstation (MS) über die Teilnehmereinrichtung (LAPTOP) von dem ersten Funknetz (WLAN) zu dem Mobilfunknetz (PLMN) übermittelt wird oder die Mobilstation (MS) dem Mobilfunknetz (PLMN) ein Signal übermittelt, wobei das Signal derart ausgestaltet ist, dass das Mobilfunknetz (PLMN) erkennt, dass der Teilnehmer Zugangsinformation zu dem ersten Funknetz (WLAN) wünscht,
**dass** das Mobilfunknetz (PLMN) der Mobilstation (MS) daraufhin eine gebührenpflichtige Kurznachricht sendet, dass die Kurznachricht Zugangsinformation zu dem ersten Funknetz (WLAN) beinhaltet, und
**dass** die Vergebührung der Kommunikation zwischen der Teilnehmereinrichtung (LAPTOP) und dem ersten Funknetz (WLAN) über eine Vergebührung der Kurznachricht im Mobilfunknetz (PLMN) erfolgt.

2. Verfahren nach Anspruch 1, **dadurch**
**gekennzeichnet,**
**dass** die Vergebührung der Kurznachricht im Mobilfunknetz (PLMN) nach dem Empfang der Kurznachricht durch die Mobilstation (MS) erfolgt.

3. Verfahren nach Anspruch 1, **dadurch**
**gekennzeichnet,**
**dass** die Vergebührung der Kurznachricht im Mobilfunknetz (PLMN) nach der Verwendung der Zugangsinformation in dem ersten Funknetz (WLAN) erfolgt.

4. Verfahren nach einem der Ansprüche 1 bis 3, **dadurch**
**gekennzeichnet,**
**dass** die Identifikationsinformation des Teilnehmers und/oder der Mobilstation (MS) die Rufnummer der Mobilstation (MS) ist.

5. Verfahren nach einem der Ansprüche 1 bis 4, **dadurch**
**gekennzeichnet,**
**dass** die Mobilstation (MS) dem Mobilfunknetz (PLMN) das Signal unter Verwendung einer Rufnummer des Mobilfunknetzes (PLMN), welche für die Authentisierung und Vergebührung des Teilnehmers des ersten Funknetzes (WLAN) eingesetzt wird, übermittelt.

6. Verfahren nach Anspruch 5, **dadurch**
**gekennzeichnet,**
**dass** es sich bei der Rufnummer um eine gebührenfreie Rufnummer handelt.

7. Verfahren nach einem der Ansprüche 1 bis 6, **dadurch**
**gekennzeichnet,**
**dass** die Gebühr für die Kurznachricht von dem vom Teilnehmer im ersten Funknetz (WLAN) angeforderten Dienst abhängt.

8. Verfahren nach einem der Ansprüche 1 bis 7, **dadurch**
**gekennzeichnet,**
**dass** das Mobilfunknetz (PLMN) die Zugangsinformation an das erste Funknetz (WLAN) übermittelt.

## Claims

1. Method for authenticating a subscriber of a first wireless communication network (WLAN) and for applying a charge to a communication between a subscriber line equipment (LAPTOP) and the first wireless communication network (WLAN), with a mobile radio communication system comprising a mobile station (MS) belonging to the subscriber and a mobile radio communication network (PLMN) being used,
**characterised in that**
information identifying the subscriber and/or the mobile station (MS) is sent via the subscriber line equipment (LAPTOP) by the first wireless communication network (WLAN) to the mobile radio communication network (PLMN), or the mobile station (MS) sends a signal to the mobile radio communication network (PLMN), the signal being embodied such that the mobile radio communication network (PLMN) recognises that the subscriber is requesting access information to the first wireless communication network (WLAN),
the mobile radio communication network (PLMN) thereupon sends the mobile station (MS) a chargeable short message, the short message contains information for accessing the first wireless communication network (WLAN), and
the charge for the communication between the subscriber line equipment (LAPTOP) and the first wireless communication network (WLAN) is applied by charging for the short message in the mobile radio communication network (PLMN) .

2. Method according to claim 1, **characterised in that**
the short message is charged for in the mobile radio communication network (PLMN) after the short message has been received by the mobile station (MS).

3. Method according to claim 1, **characterised in that**
the short message is charged for in the mobile radio communication network (PLMN) after the access information has been used in the first wireless communication network (WLAN).

4. Method according to one of the claims 1 to 3, **characterised in that**
the information identifying the subscriber and/or the mobile station (MS) is the call number of the mobile station (MS).

5. Method according to one of the claims 1 to 4,
**characterised in that**
the mobile station (MS) sends the mobile radio communication network (PLMN) the signal using a call number which belongs to the mobile radio communication network (PLMN) and is used for authenticating and charging the subscriber of the first wireless communication network (WLAN).

6. Method according to claim 5, **characterised in that**
the call number is a free call number.

7. Method according to one of the claims 1 to 6, **characterised in that**
the charge for the short message depends on the service requested by the subscriber in the first wireless communication network (WLAN).

8. Method according to one of the claims 1 to 7, **characterised in that**
the mobile radio communication network (PLMN) sends the access information to the first wireless communication network (WLAN).

## Revendications

1. Procédé pour l'authentification d'un abonné d'un premier réseau radio (WLAN) et pour la taxation d'une communication entre un équipement d'abonné (LAPTOP) de l'abonné et le premier réseau radio (WLAN), un système de communication de téléphonie mobile comprenant une station mobile (MS) de l'abonné et un réseau de téléphonie mobile (PLMN) étant utilisé,
**caractérisé en ce que**,
l'information d'identification de l'abonné et/ou de la station mobile (MS) est transmise par l'équipement d'abonné (LAPTOP) du premier réseau radio (WLAN) au réseau de téléphonie mobile (PLMN) ou bien la station mobile (MS) transmet un signal au réseau de téléphonie mobile (PLMN), le signal étant conçu de telle sorte que le réseau de téléphonie mobile (PLMN) reconnaît que l'abonné souhaite une information d'accès concernant le premier réseau radio (WLAN),
**en ce que** le réseau de téléphonie mobile (PLMN) envoie à la station mobile (MS) ensuite un message bref taxable, **en ce que** le message bref contient de l'information d'accès concernant le premier réseau radio (WLAN), et
**en ce que** la taxation de la communication entre l'équipement d'abonné (LAPTOP) et le premier réseau radio (WLAN) passe par une taxation du message court dans le réseau de téléphonie mobile (PLMN).

2. Procédé selon la revendication 1, **caractérisé en ce que**,
la taxation du message court dans le réseau de téléphonie mobile (PLMN) intervient après la réception du message court par la station mobile (MS).

3. Procédé selon la revendication 1, **caractérisé en ce que**,
la taxation du message court dans le réseau de téléphonie mobile (PLMN) intervient après l'utilisation de l'information d'accès dans le premier réseau radio (WLAN).

4. Procédé selon l'une quelconque des revendications 1 à 3,
**caractérisé en ce que**,
l'information d'identification de l'abonné et/ou de la station mobile (MS) est le numéro d'appel de la station mobile (MS).

5. Procédé selon l'une quelconque des revendications 1 à 4,
**caractérisé en ce que**,
la station mobile (MS) transmet au réseau de téléphonie mobile (PLMN) le signal avec utilisation du numéro d'appel du réseau de téléphonie mobile (PLMN), qui est utilisé pour l'authentification et la taxation de l'abonné du premier réseau radio (WLAN).

6. Procédé selon la revendication 5, **caractérisé**
**en ce que**,
en ce qui concerne le numéro d'appel, il s'agit d'un numéro d'appel gratuit.

7. Procédé selon l'une quelconque des revendications 1 à 6,
**caractérisé en ce que**,
la taxe pour le message court dépend du service demandé par l'abonné dans le premier réseau radio (WLAN).

8. Procédé selon l'une quelconque des revendications 1 à 7,
**caractérisé en ce que**,
le réseau de téléphonie mobile (PLMN) transmet l'information d'accès au premier réseau radio (WLAN).
